Europäisches Patentamt

European Patent Office

Office européen des brevets

(19)

(11) EP 1 535 883 A1

(12) EUROPEAN PATENT APPLICATION

(43) Date of publication:
01.06.2005 Bulletin 2005/22

(51) Int Cl.$^7$: C02F 3/34

(21) Application number: 04447262.9

(22) Date of filing: 26.11.2004

(84) Designated Contracting States:
AT BE BG CH CY CZ DE DK EE ES FI FR GB GR
HU IE IS IT LI LU MC NL PL PT RO SE SI SK TR
Designated Extension States:
AL HR LT LV MK YU

(30) Priority: 27.11.2003 BE 200300632

(71) Applicant: Avecom N.V.
8730 Beernem (BE)

(72) Inventors:
• Vercauteren, Tom
  9040 Sint-Amandsberg (Gent) (BE)
• van Wambeke, Mariane
  9690 Kluisbergen (BE)

(74) Representative:
Brants, Johan Philippe Emile et al
De Clercq, Brants & Partners cv
Edgard Gevaertdreef 10a
9830 Sint-Martens-Latem (BE)

(54) **Method for purifying wastewater with material containing urease enzymes**

(57)     The present invention relates to a method for purifying process water and/or wastewater by means of a urea-hydrolysing catalyst, whereby said urea-hydrolysing catalyst comprises ammonia-producing bacteria having urea-hydrolysing activity, and/or plant material or animal material having urea-hydrolysing activity. The invention also relates to devices for carrying out water purification processes.

**Description**

**Field of the invention**

The present invention relates to the field of water treatment. The methods according to the invention allow altering by means of a biological principle the concentration of respectively calcium and phosphates in process water and/or wastewater by precipitating these ions either as calcium carbonate, calcium sulphate or struvite or as magnesium/calcium phosphate, which in a further step can be converted into calcium carbonate. The invention also relates to devices for the purification of water.

**Background of the invention**

In various aqueous systems, calcium ions can be present in high concentrations. This is for instance the case in the paper recycling industry and in the gelatine industry, in production plants for citric acid and in percolates of certain landfills. These calcium ions can have undesirable side effects such as precipitation in pipes and formation of salt deposits containing calcium and magnesium together with for instance sulphate and/or phosphate. Moreover, high concentrations of calcium may contribute to the formation of biofilms and may induce corrosion of iron surfaces. In the context of the decreasing the use of fresh water, improving the re-use of (purified) water, and providing closed-loop water (recycling) systems, it is necessary in a number of cases to remove the dissolved calcium ions to a large extent from water in the form of precipitates and to render the recycling of the water possible.

Numerous methods are known for decreasing the amount of dissolved calcium from water, such as induced chemical precipitation in the form of carbonate, ion exchange and inverse osmosis. Conventional chemical $CaCO_3$ (calcium carbonate) precipitation occurs by means of addition of inorganic bases such as NaOH (soda) or $Ca(OH)_2$ (lime). Important key factors in this precipitation process are the concentration of the calcium ions ($Ca^{2+}$), the dissolved inorganic carbon (DIC = dissolved inorganic carbon), the pH and the presence of crystal particles, such as grains of sand. During these processes, compounds are added, which in part or in total remain in the water. This fact may negatively influence the (re-)use of the treated (purified) water in closed-loop recycle processes.

Calcium in the form of calcium sulphate is produced during the industrial generation of phosphoric acid and during the cleaning of $SO_2$-containing gasses. Several methods have been described to valorise high quality $CaSO_4$ gypsum. Nevertheless, large amounts of low quality gypsum are still available which should be upgraded and processed. Indeed, this gypsum is often deposited in so-called landfills for gypsum and is too contaminated with various other substances to be upgraded to a high value type of gypsum, which could be used in the construction industry.

Phosphorous is a chemical element widely occurring, for instance in domestic and industrial wastewater. Particularly potato and gelatine processing industries have to deal with wastewaters that are rich in phosphate. The norm for phosphorous discharge in wastewater is set in the European Union at 2 mg P per liter.

Problems of industries with regard to high concentrations of phosphate in process water or wastewater are situated at two levels. On one hand, phosphates in process waters and wastewaters of an industry can in cases where these waters contain high levels of calcium or magnesium (i.e. hard waters) give rise to precipitations in pipes and in nozzles. On the other hand, phosphates that are discharged in surface waters may give rise to eutrophication.

The existing techniques to remove phosphates are based on chemical precipitation and biological removal.

The most frequently used way of chemical precipitation is the addition of metal salts prior, during, or at the end of the water treatment process. The chemical process is efficient and is easy to handle. However, large quantities of mineral sludge are produced, which moreover contain large amounts of metals such as e.g. iron or aluminium.

The biological processes thus far applied for removing phosphates use activated sludge comprising phosphate-accumulating bacteria. Such processes are based on mechanisms occurring in nature, i.e. the capacity of bacteria to accumulate polyphosphate in their cells. However, the process is complex and difficult to control. Moreover, a relatively high residual concentration of phosphate remains. In addition, a large amount of phosphate-rich (organic) sludge is produced for which so far no important re-use is available.

**Summary**

The present invention relates to methods for removing calcium and/or phosphates from process water and/or wastewater. The invention also relates to methods to convert calcium sulphate which is present in certain process (waste) streams, for instance in streams comprising gypsum, to calcium carbonate. The invention also relates to methods for producing calcium carbonate which can be further used, for instance in the construction industry.

In a preferred embodiment, the invention relates to a method for purifying process water and/or wastewater by means of a urea-hydrolysing catalyst, whereby said catalyst comprises:

- ammonia-producing bacteria having urea-hydrolysing activity, and/or
- plant material or animal material having urea-hydrolysing activity

whereby an urea-hydrolysing activity is obtained of more than 0.3 g urea-N per g catalyst dry matter per day. In another preferred embodiment, the invention relates to a method for purifying process water and/or wastewater by means of an urea-hydrolysing catalyst, whereby said catalyst has an urea-hydrolysing activity of more than 3.0 g urea-N per g catalyst dry matter per day, and preferably of more than 5 g urea-N per g catalyst dry matter per day, or of more than 10 g urea-N per g catalyst dry matter per day.

The term "ammonia producing bacteria having urea-hydrolysing activity" refers to any bacteria having urea-hydrolysing activity. Suitable examples of such bacteria include but are not limited to *Bacillus* sp., such as for instance *Bacillus pasteurii, Pseudomonas* sp., *Variovorax* sp., *Leuconostoc* sp. such as for instance *Leuconostoc mesenteroides, Bacteroides* sp., *Porphyromonas* sp. or *Arcobacter* sp, or any combinations thereof. Preferably said bacteria comprise bacteria that selectively express an urease gene under given environmental conditions. In another preferred embodiment said bacteria comprise organotrophic or autotrophic bacteria.

In a preferred embodiment said plant material or said animal material having urea-hydrolysing activity comprises materials from plant or animal origin capable to cleave urea, expressed as urea-N, to ammonia. These materials may include enzymes or enzyme complexes of plant or animal origin which have an urea-hydrolysing activity, for instance urease enzymes of plant or animal origin. Suitable examples of plant materials having urea-hydrolysing activity include but are not limited to plant enzymes or enzyme complexes derived from (a part of) leafs, seeds, stems, roots of feed, food and/or industrial crops, such as for instance potato, soybean, etc..., and/or of ornamental plants. Suitable examples of animal materials having urea-hydrolysing activity include but are not limited animal enzymes or enzyme complexes present in the stomach, blood, intestinal contents, meat and/or dairy products of (domestic) animals.

Surprisingly, said urea-hydrolysing catalyst is of such physical nature that it acts as a surface of microscopic size (order of magnitude of micrometer to millimeter size) and that in the micro-zone of the catalyst a high level of carbonate is produced. Preferably, said microzone of the catalyst comprises a zone of 10 to 1000 μm around the catalyst center. In another preferred embodiment, said high levels of carbonate comprises carbonate levels of more than 50 mg/l and even more preferred of more than 100mg/l.

In a preferred embodiment, urea is added to the process water and/or wastewater at concentrations comprised between 5 mg urea-N/l and 50 g urea-N/l. More preferably, urea is added at a concentration comprised between 50 mg urea-N/l and 25 g urea-N/l, or between 0.5 g urea-N/l and 5 g urea-N/l or between 1 g urea-N/l and 2.5 g urea-N/l. In another embodiment, urea may be added to the process water and/or wastewater at concentrations comprised between 10 mg urea-N/l and 100 g urea-N/l. More preferably, urea is added at a concentration comprised between 100 mg urea-N/l and 50 g urea-N/l, between 1.0 g urea-N/l and 10 g urea-N/l or between 2 g urea-N/l and 5 g urea-N/l.

In a preferred embodiment urea is added in a ratio of ½ to 2 relative to the element that is to be removed, such as for instance calcium that is to be removed by precipitation, phosphate that is to be removed, or sulphate that is to be removed by dissociation from the calcium. This means that ratios of added urea to element may be comprised between 1:2 and 2:1. For example, an amount of urea-N is added which is half of the amount of the element to be removed. In an example of calcium-rich process water, this means that 0.5 g of urea-N may be used for 1 g of $Ca^{2+}$ ions. In another example, an equal amount of urea is added compared to the element that is to be removed. In the case of calcium-rich process water and/or wastewater 1 g of urea-N may be added for 1 g of $Ca^{2+}$ ions. In another example, in the case of calcium-rich process water and/or wastewater, this means that 0.5 g of urea-N may be added for 0.5 g of $Ca^{2+}$ ions. In yet another example, an amount of urea-N is added which is twice the amount of the element to be removed. In the case of calcium-rich process water and/or wastewater, this means for instance that 1 g of urea-N may be added for 0.5 g $Ca^{2+}$ ions.

According to another embodiment of the method according to the invention, organic and/or inorganic compounds are added to the process water or wastewater in order to improve the activity of the urea-hydrolysing catalyst. Preferably, organic and/or inorganic compounds are chosen from the group comprising sodium acetate, acetate, sugars, starch, molasses and vitamins, or any mixtures thereof. Molasses may include but are not limited to beet and/or cane molasses. Suitable sugars may include but are not limited to lactose, fructose, maltose, sucrose, dextrose, glucose, or any mixtures thereof. Suitable vitamins may include but are not limited to vitamin A, D3, E, K3, B1, B2, B3, B6 or vitamin PP, or any mixtures thereof. Preferably, said organic and/or inorganic compounds are added to the process water or wastewater in an amount comprised between 10 and 1000 mg/l, or comprised between 30 and 800 mg/l, or between 50 and 500 mg/l.

In another embodiment of the above-described methods according to the invention, monovalent or divalent cations, or a mixture thereof, are added to the process water or wastewater. Preferably, $Ca^{2+}$ and $Mg^{2+}$ ions are added. However, it will be clear that any other cation from Mendeljev's table such as for instance $Na^+$ or $K^+$ may be used in the present process.

The method according the present invention relates to the purification of process water and/or wastewater having a pH value which is comprised between 2.0 and 11.0 or between 7.0 and 14.0. Preferably, the pH values are comprised between 7.0 and 9.0 or between 8.0 and 12.0. Even more preferred, the pH values are comprised between 9.0 and 11.0.

In a preferred embodiment of the invention, the urea-hydrolysing catalyst, the urea, the monovalent or divalent cations, and the organic and/or inorganic compounds are brought together in a vessel or reactor during the above-described methods of the invention. The wastewater is introduced in this reactor at a specific rate. The wastewater and/or the sludge which is formed in the reactor thus remains during a certain residence time in the reactor. Preferably, the hydraulic residence times in the reactor are comprised between 10 minutes and 1 week. In another preferred embodiment, the hydraulic residence times in the reactor are comprised between 30 minutes and 1 week. Preferably, the sludge residence times in the reactor are comprised between 1 and 30 days. In another preferred embodiment, the temperature in the reactor is comprised between 5 C° and 80 C°, or preferably between 15°C and 50 C°.

The present invention thus relates to methods as described above for the removal of calcium and/or phosphate from process water and/or wastewaters.

In another preferred embodiment, the invention relates to a method for producing calcium carbonate, using a method for purifying process water and/or wastewater, wherein calcium is precipitated as calcium carbonate by means of an urea-hydrolysing catalyst, as defined herein. Subsequently, the formed calcium carbonate is harvested and removed. Preferably, the invention relates to a method for producing calcium carbonate by purifying calcium-rich process water and/or wastewater according to a method as described in the present invention. In a preferred embodiment, the term "calcium-rich water" refers to water containing more than 100 mg $Ca^{21}$/l.

In another embodiment, the invention relates to a method for producing calcium carbonate from wastewaters which comprise gypsum, whereby calcium sulphate which is present in these wastewaters is converted to calcium carbonate by means of the urea-hydrolysing catalyst. Preferably, the invention relates to a method for producing calcium carbonate by purifying process water and/or wastewater comprising gypsum according to a method as described in the present invention, whereby the calcium sulphate, which is present in the gypsum, is converted into calcium carbonate by the urea-hydrolysing catalyst.

In another embodiment, the present invention also provides methods for the removal of phosphate from process waters and/or wastewaters. In these methods, monovalent or divalent cations are added to the process water or wastewater at a weight ratio of [g cation /g $PO_4^{3-}$ -P] comprised between 0.10 and 50, whereby phosphate is precipitated as a phosphate compound having low water solubility. Preferably, in these methods calcium or magnesium is added. Phosphate is thus preferably precipitated as calcium phosphate or magnesium phosphate. However, it will be clear that or any other cation from Mendeljev's table such as for instance $Na^+$ or $K^+$ may be used in the present process. Wastewater with high levels of calcium or magnesium, for instance levels of 100mg cation/l or more, may also be used as a source of these cations. This allows removing the calcium or magnesium as *well* as the phosphate. Preferably, the ions are used at a weight ratio of [g cation / g $PO_4^{3-}$P] of 1 to 3, and for instance at a weight ratio of 1 to 3 g $Ca^{2+}$ ion per g phosphate-P or of 1 to 3 g $Mg^{2+}$ ion per g phosphate-P.

The present invention further relates to a device for the precipitation of calcium from process waters, wastewaters and/or flows comprising gypsum, comprising:

- a bio-catalyst comprising an urea-hydrolysing catalyst, whereby said urea-hydrolysing catalyst comprises ammonia-producing bacteria having urea-hydrolysing activity and/or plant material or animal material having urea-hydrolysing activity, whereby said urea-hydrolysing catalyst preferably has a ureolytic activity of more than 0.3 g urea-N per g catalyst dry matter per day,
- urea at a concentration comprised between 5 mg urea-N/l and 50 g urea-N/l, and
- optionally organic and/or inorganic compounds chosen from the group comprising sodium acetate, acetate, sugars, starch, molasses and vitamins, or any mixtures thereof.

In another preferred embodiment, the invention relates to a device as described above, comprising a bio-catalyst as defined herein, urea at a concentration comprised between 10 mg urea-N/l and 100g urea-N/l, and optionally organic and/or inorganic compounds as defined above, preferably in an amount comprised between 10 and 1000 mg/l, or between 30 and 800 mg/l, or between 50 and 500 mg/l.

The present invention also relates to the use of a device as described above for the production of calcium carbonate, for the precipitation of calcium from wastewater, or for the conversion of calcium sulphate to calcium carbonate.

In a further preferred embodiment, the invention provides a device for the precipitation of phosphate from process water and/or wastewater, which comprises:

- a bio-catalyst comprising an urea-hydrolysing catalyst, whereby said urea-hydrolysing catalyst comprises ammonia-producing bacteria having urea-hydrolysing activity and/or plant material or animal material having urea-hydrolysing activity, whereby said urea-hydrolysing catalyst preferably has a ureolytic activity of more than 0.3 g urea-N per g catalyst dry matter per day,

- urea at a concentration comprised between 5 mg urea-N/l and 50 g urea-N/l,
- a monovalent or divalent cation, or a mixture thereof, having a weight ratio of [g cation / g $PO_4^{3-}$P] comprised between 0.1 and 50, and preferably comprised between 1 and 3, and
- optionally organic and/or inorganic compounds chosen from the group comprising sodium acetate, acetate, sugars, starch, molasses and vitamins, or any mixtures thereof.

In another preferred embodiment, the invention relates to a device as described above, comprising a bio-catalyst as defined herein, urea at a concentration comprised between 10 mg urea-N/l and 100 g urea-N/l, a monovalent or divalent cation, or a mixture thereof, and optionally organic and/or inorganic compounds as defined above, preferably in an amount comprised between 10 and 1000 mg/l, or between 30 and 800 mg/l, or between 50 and 500 mg/l.

The present invention also relates to the use of a device as described above for the precipitation of phosphate from wastewater.

**Detailed description of the invention**

The present invention uses ureolytic-mediated precipitation methods to precipitate calcium and phosphates from process waters and/or wastewaters. In these methods it is required to provide a bio-catalyst in a sufficiently high concentration to the wastewater. The methods may be performed in a reactor. This bio-catalyst may be provided from an external source or may be induced to grow at a specific growth rate in such reactor system.

The term "bio-catalyst" as used herein, refers to catalyst comprising an urea-hydrolysing catalyst, i.e. a substance of biological origin, that is able to hydrolyse (split) urea. This urea-hydrolysing catalyst may be of plant and/or animal origin as defined above, such as for instance an enzyme or enzyme complex comprising for example urease and/or other enzymes which are able to hydrolyse urea into ammonium and carbonate. This urea-hydrolysing catalyst may also be a living bacterial culture. This culture may have been cultivated in a reactor for the purpose of use in purification processes, or it may also be a bacterial culture originating from an existing (aerobe) wastewater treatment plant, for example from activated sludge. Non-limitative examples of suitable bacteria include but are not limited to *Bacillus* sp., such as for instance *Bacillus pasteurii, Pseudomonas* sp., *Variovorax* sp., *Leuconostoc* sp. such as for instance *Leuconostoc mesenteroides, Bacteroides* sp., *Porphyromonas* sp. or *Arcobacter* sp, or any combinations thereof. In another preferred embodiment said bacteria comprise organotrophic or autotrophic bacteria. In the methods and devices according to the present invention, the use of *Bacillus* species in such bacterial culture is particularly preferred.

The terms "ureolytic", "urease" and "ureo-hydrolysing", as used herein all refer to the capacity of hydrolysing urea into ammonium and carbonate.

In the methods of the present invention, bio-catalytic reactors are used which may comprise the following components:

- a bio-catalyst which comprises (i) ammonia-producing and/or carbonate-producing bacteria having ureolytic activity and/or (ii) plant material or animal material having urease activity, whereby said catalyst preferably has a ureolytic activity of more than 0.3 g urea-N per g catalyst dry matter per day,
- urea, preferably in a concentration comprised between 5 mg urea-N/l and 50 g urea-N/l, or comprised between 10 mg urea-N/l and 100 g urea-N/l,
- optionally organic and/or inorganic compounds chosen from the group comprising sodium acetate, acetate, sugars, starch, molasses and vitamins or any mixtures thereof, as defined herein, preferably in an amount comprised between 10 and 1000 mg/l, or between 30 and 800 mg/l, or between 50 and 500 mg/l, and
- optionally a monovalent or divalent cation, such as for example $Ca^{2+}$, $Mg^{2+}$ or any other cation from Mendeljev's table, or a mixture of monovalent and divalent cations, preferably in a weight ratio of [g cation / g $PO_4^{3-}$-P] comprised between 0.10 and 50, and more preferably comprised between 1 and 3.

The term "bio-catalytic reactor" as used herein refers to a reactor wherein an ureolytic activity takes place, which is due to microbial and/or enzymatic processes. A particular feature of the present reactor is that in the reactor, *high concentrations* of carbonate and ammonia are provided, preferably in the range of more than 50mg/l and even more preferred more than 100mg/l, in the micro-zone (order of magnitude of micrometer to millimeter, and preferably comprised in a zone of 10 to 1000 µm around the catalyst center) of the bio-catalyst, which is present in said reactor.

Preferably said reactor volume is comprised between 1 and 1000 $m^3$, its temperature consists of the ambient temperature (i.e. between 10 - 40°C), and operation condition preferably comprise a normal pressure (1 atm) and a continuous feeding rate.

Ureolytic activity can be measured by monitoring the concentration of free ammonium in function of time (e. g. by using the well-known Kjeltec method or spectrophotometrically according to the well-known Nessler method after a batch supply of urea to the bio-catalyst and continuous stirring of the mixed fluid. When the added urea has been completely hydrolysed the concentration of ammonium-N substantially equals the concentration of the added urea-N, whereby 1 g urea corresponds to 0.46 g ammonium-N. Thus, a fast release of ammonium-N after the addition of urea to a living bacterial culture indicates that this culture has a high ureolytic activity. Under optimal conditions, ureolytic activities of the bio-catalyst in the bio-catalytic reactor may comprise more than 3 g urea-N/g active bacterial culture per day (active bacteria are measured according to the method of volatile solids in suspension = total solids in suspension - ash fraction). More preferably, ureolytic activities may comprise more than 5 g urea-N/ g active bacterial culture per day or more than 10 g urea-N/g active bacterial culture per day.

In an example ureolytic activity of a catalyst according to the invention can be measured by means of batch tests: addition of 0.1 g to 3.0 g urea-N to a known amount of the catalyst (about 1 g dry matter) in a total volume of 1 liter at conditions of 25°C, 1 bar and a pH ranging between 6.5 and 8.5. The reactor content is continuously stirred. The urea-hydrolysing activity is calculated on the base of measurements of ammonium release (e.g. spectrophotometrically at 425 nm, according to the Nessler assay method) in function of time.

The herein described methods and bio-catalytic reactors can be used for varying purposes.

Below, the invention is described in a number of preferred embodiments. It should be clear that, depending on its needs and purposes, a person of skill in the art may further adjust these preferred embodiments. By no means the present invention is to be considered as limited by the examples described below.

**Examples**

1. Bio-catalytic calcification (PRECIPUR-Ca)

Bio-catalytic calcification is based on controlling a microbial process for calcium precipitation through addition of a non-toxic product which comprises urea, and optionally additional compounds, which ameliorate the growth of carbonate-producing bacteria such as for instance *Bacillus* sp., *Pseudomonas* sp., *Variovorax* sp., *Leuconostoc* sp., *Bacteroides* sp., *Porphyromonas* sp., *Arcobacter* sp. or any combinations thereof. In a reactor, calcium-rich water is mixed with a certain amount of urea as defined herein and a suitable ureolytic catalyst (able to hydrolyse urea), either of plant and/or animal origin (enzymes) as defined herein, or specifically cultivated to that purpose in a reactor (living bacterial culture as defined herein).

The reactor, wherein the (calcification) process takes place under certain process conditions, is called a bio-catalytic calcification reactor (BCC).

Urea is hydrolyzed (split) under influence of the bio-catalyst into ammonium and carbonate. This process is performed in such a way that the pH of the aqueous solution in the reactor, especially of the aqueous solution in the immediate vicinity of the bio-catalyst, increases to alkalinity. The combination of the higher pH (caused by the production of ammonia from urea), the higher Dissolved Inorganic Carbonate (DIC) concentration (carbonate which is also produced from urea) and the presence of crystal particles (living bacterial culture and formed precipitates) together with the high concentration of dissolved calcium ions in the water, induces rapid calcium precipitation. This process can be represented as follows:

$$CO(NH_2)_2 + H_2O \rightarrow NH_3 + H_2NCOOH$$

$$H_2NCOOH + H_2O \rightarrow NH_3 + H_2CO_3$$

$$H_2CO_3 \rightarrow HCO_3^- + H^+ \qquad (pK_{A2} = 6.37)$$

$$HCO_3^- \leftrightarrow CO_3^{2-} + H^+ \qquad (pK_{A3} = 10.3)$$

$$2\ NH_3 + 2\ H_2O \leftrightarrow 2\ NH_4^+ + 2\ OH^-$$

$$CO(NH_2)_2 + 2\ H_2O \rightarrow 2\ NH_4^+ + CO_3^{2-}$$

$$CO_3^{2-} + Ca^{2+} \rightarrow CaCO_3 \qquad (K_{sp} = 3.8 \times 10^{-9})$$

Because this process is controlled biologically by adding urea as starting product which is neither a dangerous nor irritating chemical, the system is self-regulating with regard to the pH-increase. In contrast to the addition of strong alkali, the pH-increase with urea is limited and $CaCO_3$-precipitation occurs already at relatively low pH values in the bulk solution (starting from pH 7 on).

**Start-up - Inoculation:** When starting up the BCC reactor, a sufficiently high concentration of bio-catalyst, either an enzyme complex (urease or an enzyme that hydrolyses urea into ammonium and carbonate), or a mixture of enriched bacteria (such as *Bacillus* species) having a high urea-hydrolyzing activity (of at least 0.3 g urea-N/g catalyst dry matter per day), may be introduced in the reactor (preferably at levels of 0.1 g dray weight per liter). It is possible to cultivate an enriched bacterial culture in a short period of time (a few weeks), starting from, for example, activated sludge produced during aerobic water treatment. Preferably, sludge is obtained from a company whose wastewater comprises relatively high concentrations of calcium (> 100 mg $Ca^{2+}$/l). This sludge (5 -15 g total suspended solids/1) is brought into the BCC reactor and fed with calcium-rich water (for instance 0.5 g $Ca^{2+}$/l) and urea-N at a ratio of 1 (this means e.g. 0.5 g urea-N to 0.5 g $Ca^{2+}$) and a hydraulic residence time of at least 1 day (1 calcium-rich water per l reactor per day). The temperature is preferably more than 15°C and the pH of the mixed suspension is preferably more than 7.5. The mixed suspension is thoroughly stirred, preferably by means of a rod, in order to improve the contact between the water, the added urea and the bio-catalyst, and in order to keep the bio-catalyst in suspension. Additionally, a limited aeration (additional pH increase by $CO_2$ stripping) is recommended. During the start-up period, no sludge will be removed from the BCC reactor. During the process, or only during the start-up, the production of bio-catalyst can be ameliorated by adding organic and/or inorganic compounds such as sodium acetate, acetate, sugars, starch, vitamins, and other compounds or any mixtures thereof as defined herein which improve the growth of carbonate-producing bacteria, and thus the activity of the bio-catalyst.

**Follow-up and control:** Based on the measurements of the ureolytic activity and the removal of the dissolved $Ca^{2+}$ ions, the loading rate of the reactor may be increased. This implies a higher influent flow rate of calcium-rich water. In case of optimal operation of the BCC reactor, hydraulic residence times of 2 to 8 hours may be reached for water comprising approximately 0.5 g $Ca^{2+}$/l. Urea is added in accordance with the calcium loading level. After the start-up period, the maximum amount of urea comprises 1 g urea-N per g calcium to be removed and preferably 0.5 g urea-N per g calcium to be removed. In case of optimal operation of the BCC reactor, higher calcium removal yields (>80%) may be obtained when applying these amounts of urea than those which may be theoretically expected according to stoichiometrics (urea versus calcium), for instance due to partial coprecipitation.

The yield of the $CaCO_3$ precipitation may be monitored by measuring the concentration of residual $Ca^{2+}$ (for instance by atomic absorption).

After $CaCO_3$ precipitation in the BCC reactor, separation of the fluid fraction is performed by gravitational deposition of the bio-catalyst, either in a separate decanter (necessary to pump) or in the same reactor whereby the different phases of the process are controlled in time. A part of the deposited crystals is kept as "catalyst" in the BCC crystallization reactor; the other part is removed. For each g of calcium removed from the influent, 1 g to 2.5 g of precipitate is expected. The amount of removed sludge is controlled in order to keep the residence time of the bio-catalyst in the BCC reactor between 1 and 30 days, typically circa 10 days. The removed sludge contains a lot of inorganic material ($CaCO_3$ precipitate) and as a consequence settles rapidly. After a short gravitational sedimentation and thickening, it is possible to obtain dry matter amounts of the removed sludge of 17%. The ratio of inorganic material / dry matter in the sludge preferably comprises more than 90%.

**Use of the BCC reactor for water purification**

In case this ureolytic-mediated process of precipitating calcium is applied in a water purification plant, for the purpose of re-using the purified wastewater, the BCC reactor is preferably placed in between the anaerobic water purification system and the subsequent aerobic water purification system. The main arguments for this include:

- the higher pH value and the higher DIC value of anaerobic purified wastewater is an extra stimulus for the precipitation process;
- the effluent of the anaerobic water purification (mesophilic) system has a stabile temperature of about 33°C;
- the balanced quantity of urea may require a biological removal of the added N in the subsequent aerobic water purification phase. This can be achieved by means of a conventional nitrification/denitrification process.

In Table 1 examples of a number of important process parameters of this ureolytic-mediated process of calcium precipitation in a BCC reactor are summarised. These data refer to a wastewater containing about 0.5g/l $Ca^{2+}$.

Table 1

| Calcium-rich water (preferably >100mg $Ca^{2+}$l) | Anaerobic effluent |
|---|---|
| Inoculation of BCC | Urease |
| | Enriched ureolytic bacterial culture |
| Balancing of quantity of urea | |
| during start up | 1 to 2 g urea-N/g Ca $^{2+}$ |
| during normal operational activity | ≤1.0 g urea-N/g Ca $^{2+}$; |
| | preferably ≤0.5 g urea-N/g Ca $^{2+}$ |
| Hydraulic residence time in the BCC reactor | |
| during start up | ≥1 day |
| during normal operational activity | 2 to 8 hours, |
| | 10 minutes to 1 week or 30 minutes |
| | to 1 week |
| pH | Possibly between pH 2 and 14, |
| | preferably between pH 2 and 11, |
| | more preferably between pH 7 and 9 |
| Temperature | Possibly between 5°C and 80°C |
| | Preferably between 15°C and 50°C |
| Separation of the precipitate | By sedimentation, |
| | centrifugation or |
| | filtration |
| Sludge residence time in the BCC reactor | Between 1 and 30 days |
| Ureolytic activity of the bio-catalyst | 1 g urea-N/g VSS (volatile suspended |
| (During normal process activity) | solids) per day or more |
| calcium removal yield | > 80% |

In this embodiment, the invention relates to methods for the precipitation of calcium at pH levels from pH 7.0 on in the bulk liquid and this by combining urea, which is not toxic, and a cultivated bacterial culture, which is able to hydrolyse urea into ammonia and carbonate. As a consequence favourable conditions are created for the precipitation of calcium carbonate. To achieve this, bacterial cultures with a high ureolytic activity have been selected and cultivated and a bio-catalytic calcification reactor and bio-catalytic calcification procedure were developed which permit to obtain high yields of calcium removal.

Moreover, the ureolytic-mediated precipitation of calcium is partly a biological, partly a chemical process, which can take place in a separate reactor and under certain well-determined process conditions. In certain industries this increases the possibility to re-use purified wastewater in certain parts of the production process, without having a risk of deposition of calcium in equipment and piping. This process permits to remove calcium ions from process water and/or wastewater, whereby only ammonium remains in the water. The latter may be removed from the water by various conventional nitrogen removal processes. Thus, calcium may be removed from the water, without enriching the water with other salts or ions.

2. Bio-catalytic precipitation of phosphate (PRECIPUR-P)

The same principle as mentioned above is used for the control of a microbiologically-medicated process for phosphate precipitation.

In a reactor phosphate-rich (preferably comprising more than 10mg P/l) process water or waste water is brought together with

(1) urea, optionally supplemented with other compounds which support the growth of carbonate-producing bacteria, such as for instance organic and/or inorganic compounds as defined herein,
(2) an urea-hydrolysing catalyst (micro-organisms able to hydrolyse) or ureolytic enzymes (either of plant, animal or synthetic origin) as defined herein, and
(3) a monovalent or divalent cation, e.g. $Ca^{2+}$ or $Mg^{2+}$, although any other cation of the periodic table of Mendeljev may also be used.

A reactor, wherein above-mentioned chemicals and/or micro-organisms and/or enzymes are brought together under below-specified specific conditions of residence time, concentrations and relative ratios, is also referred to as a BCP reactor (BioCatalytic "Phosphatation").

In the BCP reactor, the present urea is hydrolysed (split) to ammonia and carbonate under influence of the bio-catalyst (the ureolytic catalyst and/or enzymes). This process is performed such that the pH of the aqueous medium increases to alkaline levels (pH range of 7.0 to 14.0). As a result of the hydrolysis of the urea, the pH of the micro-zone surrounding the bio-catalyst will increase (because of the generation of ammonia from urea). In the vicinity of the bio-catalyst a precipitation of phosphate salts will be generated due to the presence of dissolved P ($PO_4^{3-}$-P) and $Ca^{2+}$ (or other monovalent or divalent cations). Precipitation of phosphate salts in the vicinity of the bio-catalyst will also be generated due to the local increase of pH which is a result of the ureolytic activity, i.e. a result of the generation of ammonia from urea. Other precipitates may also be formed in case of the presence of other ions and/or molecules, for instance e.g. $MgNH_4PO_4.6H_2O$ or $Mg_2.PO_4.OH.4H_2O$, in the presence of Mg.

Summarized, the combination of the following factors, induce rapid precipitation of phosphate as $Ca_3(PO_4)_2$ or another ammonia phosphate compound which is poorly soluble (or analogues and/or mixtures in case of the presence of other cations and/or ammonia); said factors including:

- an increased pH (partly in the bulk phase, but especially in the micro-sphere surrounding the bio-catalyst);
- the presence of crystal particles (living bacterial culture and formed precipitates);
- the addition of urea;
- optionally, the addition of organic compounds such as e.g. NaAc (sodium acetate), sugars, molasses, vitamins, and other compounds or any mixtures thereof, to improve the activity of the bio-catalyst, and thus to improve the pH-regulating effect of said bio-catalyst;
- the presence of cations (monovalent or divalent, e.g. $Ca^{2+}$, either added or already present in process water or wastewater).

Since the described process is a biologically controlled process with urea as a controlling factor; the system is self-regulating with regard to the increase of the pH. In contrast to the addition of alkali, the increase of pH with urea is limited and precipitation already takes place at relatively low pH values in the bulk liquid (starting from pH 7.0 on).

**Operational management**

The BCP reactor management involves the following aspects:

- integrating of a "bio-catalytic reactor" in process waters or wastewaters with phosphate concentrations of 1 mg $PO_4^{3-}$-P/l or more,
- residence times of process water and/or wastewater in the BCP reactor in the range of 10 minutes to 1 week, or in the range of 30 minutes to 1 week,
- residence times of the bio-catalytic sludge and/or crystal particles in the BCP reactor from 1 to 30 days,
- balanced quantities of urea-N in the process water and/or wastewater in concentrations comprised between 5 mg urea-N/l and 50g urea-N/l, or comprised between 10 mg urea-N/l and 100g urea-N/l,
- weight ratios of [g $Ca^{2+}$ / g $PO_4^{3-}$] in the range of 0.10 to 50, preferably in the range of 1 to 3;
- weight ratios of [g $Ca^{2+}$ /g urea] in the range of 0.10 to 50, preferably in the range of 1 to 2;
- replacement of above-mentioned $Ca^{2+}$ by any other monovalent or divalent cation or a mixture thereof, and/or
- pH values between 7.0 and 14.0.

The insoluble phosphates are removed by sedimentation, centrifugation or filtration.

This embodiment regards a method for phosphate precipitation by means of microbiological and/or enzymatic processes, induced by means of hydrolysis of urea, whereby the pH can be kept at pH values from 7.0 and higher. Moreover, a bacterial culture with ureolytic activity is used, which permits to obtain high phosphate removal yields.

In addition, by means of the BCP reactor, it becomes possible to remove phosphate to a certain or larger extent from process and/or wastewater. As a result thereof, the purified process water can be re-used and/or the wastewater can be drained with lower residual phosphate concentrations. Also, a phosphate-containing sludge can be produced (consisting of the bacterial culture and/or crystal particles of the BCP reactor, on which phosphate is precipitated) which can have many useful applications, such as for instance as fertilizers.

The present process permits to remove phosphate ions from water, whereby only ammonium remains in the water (as a result of the hydrolysis of urea into ammonium and carbonates). The residual ammonium can subsequently be removed from the water by conventional nitrogen removal processes. Thus, phosphate can be removed from the process water and/or wastewater, whereby said water is not enriched with other ions or salts.

## 3. Bio-catalytic conversion of calcium sulphate in calcium carbonate (PRECIPUR-S)

According to these methods, waste gypsum originating from gypsum flows or gypsum dumps which is moderately soluble and unstable, is converted into calcium carbonate which is poorly soluble. By means of these methods calcium carbonate can also be obtained.

The gypsum is brought in suspension with water or wastewater, preferably having 10 - 30% dry matter. Then, this suspension is treated with a urea solution and with an enriched culture of micro-organisms which hydrolyse the urea to ammonia and carbonic acid gas. The solution of urea typically contains 5 % to 15 % urea-N. The enriched culture of micro-organisms comprises bacteria, which are capable to hydrolyse urea and, on based hereon to gain energy to grow. As explained herein, a whole range of bacteria is capable hereof, especially *Bacillus* species are very suitable herefor. These aerobic bacteria produce urease enzyme and, moreover, are able to flourish and grow under high pH conditions. In order to obtain a highly active culture of the ureolytic bacteria, in case of the conversion of gypsum to calcium carbonate, a carbon source has to be added to the culture, e.g. sodium acetate, acetate, starch, molasses or any kind of organic waste. During conditions of high urea and gypsum concentrations a high pH (7.0 or higher) is obtained and also a high carbonate concentration. Under these conditions, the latter will precipitate the calcium ions associated with sulphate as calcium carbonate (calcite or another form of this salt). The whole process results in

(i) the formation of calcium carbonate that precipitates, and

(ii) the formation of ammonia sulphate that remains soluble.

The aqueous fraction may be carried off for further treatment; the calcium carbonate can be collected for deposition or for re-use.

In this embodiment, the combination of urea and waste gypsum with an enriched culture of bacteria capable of hydrolysing urea permits the convert gypsum into calcium carbonate.

Thus the present method describes a process whereby ureum is added in such amounts in order to bring the medium at a pH of 7 to 9. The combination of urea with a suitable carbon source (sodium acetate, acetate, starch, sugars, at a conventional demand of oxygen as present in waste products and other) allows the bacteria to grow and become the urea-hydrolysing catalyst by producing themselves the urea-hydrolysing enzymes. If they grow, they act as bio-catalyst and accelerate the generation of calcium carbonate from calcium ions and carbonic acid gas.

The present invention also relates to a novel process whereby impure waste gypsum is converted to stable calcium carbonate, the latter being more suitable to be disposed in a dump or to be re-used, for instance in the construction industry.

## Claims

**1.** Method for purifying process water and/or wastewater by means of a urea-hydrolysing catalyst which comprises:

- ammonia-producing bacteria having urea-hydrolysing activity, and/or
- plant material or animal material having urea-hydrolysing activity,

whereby an urea-hydrolysing activity of more than 0.3 g urea-N per g catalyst dry matter per day is obtained.

**2.** Method according to claim 1, whereby urea is added to the process water and/or wastewater at concentrations comprised between 5 mg urea-N/l and 50 g urea-N/l.

**3.** Method according to claim 1 or 2, whereby organic and/or inorganic compounds are added to the process water and/or wastewater for improving the activity of said urea-hydrolysing catalyst.

**4.** Method according to claim 3, whereby said organic and/or inorganic compounds are chosen from the group comprising sodium acetate, acetate, sugars, starch, molasses and vitamins, or any mixtures thereof.

**5.** Method according to any of claims 1 to 4, whereby a monovalent or divalent cation or a mixture thereof is added to the process water and/or wastewater.

**6.** Method according to claim 5, whereby said cation is $Ca^{2+}$ or $Mg^{2+}$.

7. Method according to any of claims 1 to 6 for the purification of process water and/or wastewater having a pH value of between 7.0 and 14.0.

8. Method according to any of claims 1 to 7, whereby the urea-hydrolysing catalyst, the urea, the monovalent or divalent cations and the organic and/or inorganic compounds are brought together in a reactor.

9. Method according to claim 8, whereby the hydraulic residence times in the reactor are comprised between 10 minutes and 1 week.

10. Method according to claim 8 or 9, whereby the sludge residence times in the reactor are comprised between 1 and 30 days.

11. Method according to any of claims 8 to 10, whereby the temperature in the reactor is comprised between 5°C and 80°C.

12. Method according to any of claims 1 to 4 and 7 to 11, whereby calcium is removed from the process water and/or wastewater.

13. Method for producing calcium carbonate by purifying calcium-rich process water and/or wastewater according to a method of any of claims 1 to 4 and 7 to 11.

14. Method for producing calcium carbonate by purifying process water and/or wastewater comprising gypsum according to a method of any of claims 1 to 4 and 7 to 11, whereby the calcium sulphate, which is present in the gypsum, is converted into calcium carbonate by the urea-hydrolysing catalyst.

15. Method according to any of claims 1 to 11, whereby phosphate is removed from the process water and/or wastewater.

16. Method according to claim 15, whereby monovalent or divalent cations are added to the process water and/or wastewater at a weight ratio of [g cation / g $PO_4^{3-}$P] comprised between 0.10 and 50, whereby phosphate is precipitated as a phosphate compound having low water solubility.

17. Method according to claim 16, whereby phosphate is precipitated as calcium phosphate or magnesium phosphate.

18. Method according to any of claims 5 to 17, whereby calcium and phosphate are removed from the process water and/or wastewater.

19. Device for the precipitation of calcium from process water, wastewater and/or flows comprising gypsum, comprising:

   - a bio-catalyst comprising an urea-hydrolysing catalyst whereby said urea-hydrolysing catalyst comprises ammonia-producing bacteria having urea-hydrolysing activity and/or plant material or animal material having urea-hydrolysing activity,
   - urea at a concentration comprised between 5 mg urea-N/l and 50 g urea-N/l, and
   - organic and/or inorganic compounds chosen from the group comprising sodium acetate, acetate, sugars, starch, molasses and vitamins or any mixtures thereof.

20. Use of the device according to claim 19 for the production of calcium carbonate.

21. Device for the precipitation of phosphate from process water and/or wastewater comprising:

   - a bio-catalyst comprising an urea-hydrolysing catalyst, whereby said urea-hydrolysing catalyst comprises ammonia-producing bacteria having urea-hydrolysing activity and/or plant material or animal material having urea-hydrolysing activity,
   - urea at a concentration comprised between 5 mg urea-N/l and 50 g urea-N/l,
   - a monovalent or divalent cation, or a mixture thereof, having a weight ratio of [g cation / g $PO_4^{3-}$P] comprised between 0.1 and 50, and
   - organic and/or inorganic compounds chosen from the group comprising sodium acetate, acetate, sugars, starch, molasses and vitamins or any mixtures thereof.

**European Patent Office**

## EUROPEAN SEARCH REPORT

Application Number

EP 04 44 7262

| | DOCUMENTS CONSIDERED TO BE RELEVANT | | |
|---|---|---|---|
| Category | Citation of document with indication, where appropriate, of relevant passages | Relevant to claim | CLASSIFICATION OF THE APPLICATION (Int.Cl.7) |
| X | HAMMES FREDERIK ET AL: "Calcium removal from industrial wastewater by bio-catalytic CaCO3 precipitation." JOURNAL OF CHEMICAL TECHNOLOGY AND BIOTECHNOLOGY, vol. 78, no. 6, June 2003 (2003-06), pages 670-677, XP002317286 ISSN: 0268-2575 | 1-13, 15-21 | C02F3/34 |
| Y | * page 670 * <br> * page 672 * <br> * page 675 * <br>----- | 14 | |
| X | HAMMES F ET AL: "A novel approach to calcium removal from calcium-rich industrial wastewater" WATER RESEARCH, ELSEVIER SCIENCE PUBLISHERS, AMSTERDAM, NL, vol. 37, no. 3, February 2003 (2003-02), pages 699-704, XP004397337 ISSN: 0043-1354 | 1-13, 15-21 | |
| Y | * page 700, right-hand column - page 702 * <br>----- | 14 | **TECHNICAL FIELDS SEARCHED (Int.Cl.7)** |
| X | HAMMES FREDERIK ET AL: "Strain-specific ureolytic microbial calcium carbonate precipitation." APPLIED AND ENVIRONMENTAL MICROBIOLOGY, vol. 69, no. 8, August 2003 (2003-08), pages 4901-4909, XP002317287 ISSN: 0099-2240 | 1-13, 15-21 | C02F |
| Y | * page 4905, right-hand column - page 4908, left-hand column * <br>----- <br>-/-- | 14 | |

The present search report has been drawn up for all claims

| Place of search | Date of completion of the search | Examiner |
|---|---|---|
| Munich | 14 February 2005 | Glod, G |

**European Patent Office**

# EUROPEAN SEARCH REPORT

Application Number

EP 04 44 7262

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | HAMMES F ET AL: "Molecular, biochemical and ecological characterisation of a bio-catalytic calcification reactor." APPLIED MICROBIOLOGY AND BIOTECHNOLOGY, vol. 62, no. 2-3, August 2003 (2003-08), pages 191-201, XP002317288 ISSN: 0175-7598 | 1-13, 15-21 | |
| Y | * page 196, right-hand column - page 200, left-hand column * | 14 | |
| X | UDERT K M ET AL: "Urea hydrolysis and precipitation dynamics in a urine-collecting system" WATER RESEARCH, ELSEVIER SCIENCE PUBLISHERS, AMSTERDAM, NL, vol. 37, no. 11, June 2003 (2003-06), pages 2571-2582, XP004424023 ISSN: 0043-1354 | 1-13, 15-21 | |
| Y | * page 2572, left-hand column - page 2574 *  * page 2580, right-hand column - page 2581 * | 14 | |
| Y | HAMMES FREDERIK ET AL: "Key roles of pH and calcium metabolism in microbial carbonate precipitation." RE/VIEWS IN ENVIRONMENTAL SCIENCE AND BIO/TECHNOLOGY, vol. 1, no. 1, 2002, pages 3-7, XP002317289 ISSN: 1569-1705 * page 4, left-hand column; figure 1; table 1 * | 14 | |

TECHNICAL FIELDS SEARCHED (Int.Cl.7)

The present search report has been drawn up for all claims

| Place of search | Date of completion of the search | Examiner |
|---|---|---|
| Munich | 14 February 2005 | Glod, G |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)